# EUROPEAN PATENT APPLICATION

(11) **EP 1 956 421 A1**
(43) Date of publication of application: **13.08.2008**
(21) Application number: 07119963.2
(22) Date of filing: 05.11.2007
(51) Int. Cl.: G02F 1/13357

(54) **Collimator for backlight unit and lcd using the same**

(30) Priority: 09.02.2007 KR 20070013812
(71) Applicant: Samsung Electronics Co., Ltd., Suwon-si Gyeonggi-do 443-742 (KR)
(72) Inventor: Min, Jee-hong c/o Samsung Advanced Institute of Technology, Gyeonggi-do (KR); Lee, Moon gyu c/o Samsung Advanced Institute of Technology, Gyeonggi-do (KR); Choe, Kyu-min c/o Samsung Advanced Institute of Technology, Gyeonggi-do (KR)
(74) Representative: Anderson, James Edward George

(57) **Abstract**

Provided are a collimator for a backlight unit and a liquid crystal display (LCD) using the collimator. The collimator includes a plate including a plurality of light passing areas, passing light incident from the backlight unit, and light non-passing areas formed among the plurality of light passing areas. The light passing areas comprise reflective surfaces which are inclined toward a plane of the plate and a direction perpendicular to the plane of the plate to reduce an emission angle of reflected light emitted toward the LCD panel more than an incidence angle of light incident onto the light passing areas.

## Description

### BACKGROUND OF THE INVENTION

### Field of the Invention

Apparatuses consistent with the present invention relate to a beam collimator for a backlight unit, and more particularly, to an optical film-type beam collimator capable of increasing a viewing angle of a liquid crystal display (LCD).

### Description of the Related Art

In a conventional Liquid Crystal Display (LCD) apparatus, diffused light is supplied from a backlight unit to an LCD panel. The LCD panel switches the light supplied from the backlight unit through liquid crystals driven by an electric field. The light supplied from the backlight unit is polarized by a polarizer provided on a back surface of the LCD panel before becoming incident onto a liquid crystal. A direction of a polarization axis varies with an incidence axis of light incident from the polarizer of the LCD panel. The variation of the polarization axis caused by a light incidence direction results in a different contrast ratio according to a viewing position in front of the LCD panel.

In a case of an LCD having a viewing angle of 170°, a contrast ratio is generally about 1000:1 in a direction perpendicular to a plane of a panel but about 10:1 in a direction of 85° which is a maximum viewing angle. As an image deviates from a front surface of an LCD, the contrast ratio is reduced, which deteriorates the quality of the image. Thus, one research area in LCD technology is to increase a viewing angle. In general, a viewing angle compensation film is used to increase a viewing angle in conjunction with various methods of compensating for deterioration of LC performance depending on an angle, such as an in-plane-switching (IPS) mode, a vertical-alignment (VA) mode, an optically compensated bend (OCB) mode, etc. However, this causes a reduction of a numerical aperture (NA) and an increase of the number of manufacturing processes. As a result, the manufacturing cost is increased.

### SUMMARY OF THE INVENTION

According to an aspect of the present invention, there is provided a collimator for a backlight unit that is disposed between an LCD panel of an LCD and the backlight unit, the collimator comprising: a plate comprising a plurality of light passing areas and a plurality of light non-passing areas formed among the plurality of light passing areas, the plurality of light passing areas comprise reflective surfaces which are inclined toward a plane of the plate and a direction perpendicular to the plane of the plate to reduce an emission angle of reflected light emitted toward the LCD panel to be less than an incidence angle of light incident onto the plurality of light passing areas.

The plate may include a first plate and a second plate, the first plate comprising first light passing areas, and the second plate comprising second light passing areas corresponding to the first light passing areas, respectively.

Diameters of openings of the first and the second light passing areas may be smaller than diameters of exits of the first and the second light passing areas, and the reflective surfaces may be provided on inner surfaces of the first and the second light passing areas.

The exits of the first light passing areas may be aligned with the openings of the second light passing areas, the openings of the first light passing areas and the exits of the second light passing areas may respectively deviate from the exits of the first light passing areas and the openings of the second light passing areas, and the reflective surfaces may be provided on the inner surfaces of the first and the second light passing areas. Facing inner surfaces of the first and the second light passing areas may be parallel with one another.

Protrusions may be formed on inner surfaces of the plurality of light passing areas of the plate and include first surfaces inclining toward openings of the plurality of light passing areas and the second surfaces inclining toward exits of the plurality of light passing areas. The reflective surfaces may be provided on the inner surfaces of the first and the second light passing areas.

Reflective layers may be formed in the light non-passing areas to reflect incident light toward the backlight unit.

Exemplary embodiments of the present invention may thus provide a beam collimator for a backlight unit, which is capable of increasing light use efficiency and a viewing angle of a liquid crystal display (LCD), and a liquid crystal display (LCD) using the beam collimator.

### BRIEF DESCRIPTION OF THE DRAWINGS

The above and other exemplary aspects and advantages of the present invention will become more apparent by the following detailed description of exemplary embodiments thereof with reference to the attached drawings in which:
FIG. 1 is a schematic cross-sectional view of a liquid crystal display (LCD) according to an exemplary embodiment of the present invention;
FIG. 2 illustrates a concept of a collimator according to an exemplary embodiment of the present invention;
FIG. 3 is a schematic cross-sectional view of a collimator according to an exemplary embodiment of the present invention;
FIGS. 4A and 4B are schematic cross-sectional views of collimators according to exemplary embodiments of the present invention;
FIG. 5 is a schematic cross-sectional view of a collimator according to another exemplary embodiment of the present invention;
FIG. 6 is a schematic cross-sectional view of a collimator according to another exemplary embodiment of the present invention;
FIGS. 7A, 7B, 8A, and 8B illustrate results of a simulation performed to test a performance of a collimator of the present invention; and
FIG. 9 illustrates detailed conditions of the collimator of the present invention applied to the simulation.

### DETAILED DESCRIPTION OF EXEMPLARY EMBODIMENTS OF THE INVENTION

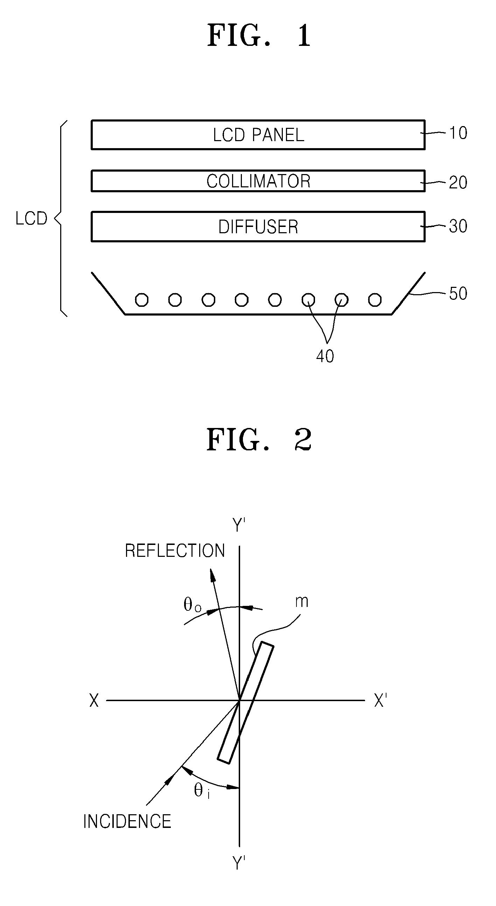

FIG. 1 is a schematic cross-sectional view of a liquid crystal display (LCD) using a collimator according to an exemplary embodiment of the present invention. Referring to FIG. 1, a collimator 20 according to the present embodiment is disposed between an LCD panel 10 and a diffuser 30. Backlight units or light sources 40 and a reflector 50 are sequentially disposed in the rear of the diffuser 30. The backlight units or light sources 40 include a plurality of cold cathode tubes or light emitting diodes (LEDs). The reflector 50 reflects light emitted from the backlight units or light sources 40 toward the diffuser 30. The diffuser 30 is an optional element and may be disposed between the collimator 20 and the backlight units or light sources 40.

The collimator 20 collimates light incident from the diffuser 30 at a wide angle and allows the collimated light to be incident onto the LCD panel 10. In more detail, the collimator 20 does not completely collimate incident light but reduces an emission angle of the incident light more than an incidence angle, which allows the incident light to be incident onto the LCD panel 10 within an angle of approximately 90° to a plane of the LCD panel 10. The incidence and emission angles' mean gradients are perpendicular to a plane of the collimator 20 or the LCD panel 10. For example, a reduction of the incidence angle with respect to the LCD panel 10 means in the descriptions and claims of the present invention that light is incident onto the LCD panel 10 close to a direction perpendicular to the plane of the LCD panel 10.

The above-described collimation of the light is performed by a light passing area of the collimator 20. A reflective surface is formed in the light passing area to produce an emission angle that is smaller than the incidence angle in order to improve a contrast ratio of an LCD, which increases a viewing angle.

FIG. 2 illustrates a concept of a collimator reducing a reflection angle more than an incidence angle according to an exemplary embodiment of the present invention. Referring to FIG. 2, a reflective surface m is provided at an intersection between X-X' axis and Y-Y' axis orthogonal to the X-X' axis. Here, the X-X' axis is parallel with the plane of the collimator 20, and the Y-Y' axis is orthogonal to the plane of the collimator 20 and thus perpendicular to the LCD panel 10. The reflective surface m is inclined toward the X-X' and Y-Y' axes, and the reflective surface m is thus inclined toward a light advancing path. Light incident from a light source is incident onto the reflective surface m at an incidence angle θi from the Y-Y' axis and then reflected at a reflection angle θₒ smaller than the incidence angle θᵢ. In other words, the incidence angle of light is θᵢ but a reflection angle θₒ smaller than θᵢ is obtained during emission of the light. In this case, light, which is incident from the diffuser 30 at a very wide incidence angle, may be incident onto the LCD panel 10 at an angle smaller than the very wide incidence angle. One or more reflective surfaces may be provided and will be described in more detail later in various exemplary embodiments below. New embodiments may be realized using such exemplary embodiments and well-known optical design methods, which pertain to the scope of the present invention.

In the detailed exemplary embodiments of the present invention, a beam of light incident at a too wide angle may be reflected toward a light source, which allows the beam to be re-incident through the light source or a reflector.

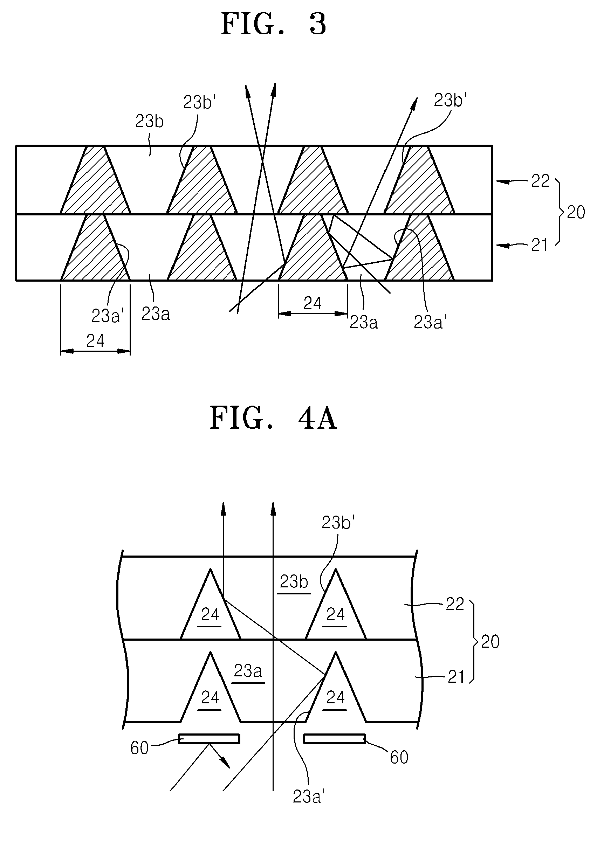

FIG. 3 is a schematic cross-sectional view of a collimator 20 according to an exemplary embodiment of the present invention. Referring to FIG. 3, the collimator 20 according to the present embodiment includes first and second plates 21 and 22. The collimator 20 also includes light passing areas 23 and non-passing areas 24 marked with oblique lines. The light passing areas 23 include first and second light passing areas 23a and 23b respectively formed in the first and second plates 21 and 22. The first and the second light passing areas 23a and 23b respectively have reflective surfaces 23a' and 23b' as inner surface. The light non-passing area 24 may have an additional mirror or mirror structure to re-reflect incident light toward a light source or a reflector.

The first and the second light passing areas 23a and 23b have structures which extend toward light advancing directions, and thus the inner surface of the first and the second light passing areas 23a and 23b, i.e., the reflective surfaces 23a' and 23b', are inclined toward light emitting directions. A beam incident through the first light passing area 23a at a relatively narrow incidence angle is directly emitted through the second light passing area 23b. A beam incident at a wide incidence angle is reflected from the reflective surfaces 23a' and 23b' of the first and the second light passing area 23a and 23b at least once and then is emitted. Beams having even wider incidence angles are reflected from the first light passing area 23a several times and then are emitted through the second light passing area 23b.

It has been described in FIG. 3 that reflective surfaces are formed on both sides of each of the first and the second light passing areas 23a and 23b. However, the reflective surfaces also enclose a central axis of each of the first and the second light passing areas 23a and 23b. The first and the second light passing areas 23a and 23b may have inner surfaces shaped as a truncated cone, a trigonal pyramid, a quadrangular pyramid, or a polygonal pyramid. According to these structures, a reflective surface 23'b of a light passing area 23b of the second plate 22, which does not contact the first plate 21, forms a reflective surface to reflect light. Thus, light incident onto the outer surface 21 a is reflected toward the first light passing area 23a.

According to the above-described structure, light emitted from a collimator can be incident onto a target LCD panel at a narrower angle than an incidence angle at which light is incident onto the collimator. It is obvious to one of ordinary skill in the art that light passing and non-passing areas can be variously designed. For example, the light passing area can be an area filled as a portion of a body of a plate, and the light non-passing area can be an empty air area. As a further example, a reflective surface can reflect incident light due to a difference between refractive indexes of a material of the plate, e.g., plastic, and air of the non-passing area. As yet another example, the material of the plate may be PET, PC, PMMA, or the like, and a thickness of the collimator may be about 100µm.

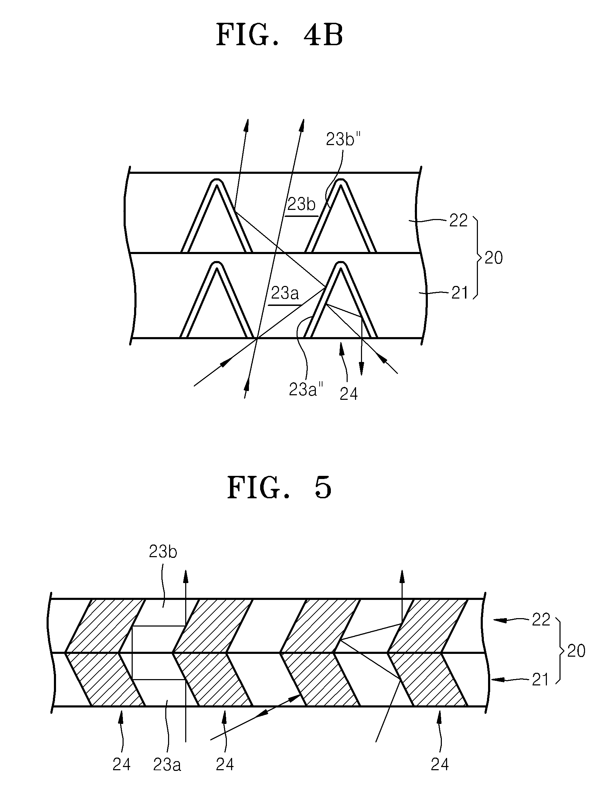

FIGS. 4A and 4B illustrate modifications of a light non-passing area according to whether additional reflective layers are provided. Referring to FIG. 4A, cavities having triangular cross-sections are formed in first and second plates 21 and 22 to correspond to light non-passing areas 24. Reflective layers 60 are provided in front of the first plate 21 to intercept light from being incident onto the light non-passing areas 24 and reflect the light toward light sources. The reflective layers 60 may be attached to the first plate 21 or to another adjacent element, e.g., the diffuser 30 of FIG. 1. The first and the second light passing areas 23a and 23b reflect light due to a difference between refractive indexes of a material of the first and the second plates 21 and 22, e.g., plastic, and air of the light non-passing areas 24.

FIG. 4B illustrates light non-passing areas 24 not including reflective layers 60. Referring to FIG. 4B, reflective layers 23a" and 23b" are formed on inner walls of cavities of the light non-passing areas 24. The reflective layers 23a" and 23b" optically insulate the light passing areas 23a and 23b from the light non-passing areas 24 and reflect light incident from the light passing areas 23a and 23b and the light non-passing areas 24.

According to another aspect of the present invention, cavities of the light non-passing areas may be filled with a material having the same or different refractive index as or from that of the light passing areas. In the case of the embodiment of FIG. 4B, the reflective layers 23a" and 23b" are formed on the inner walls of the cavities. Thus, the cavities may be filled with any material regardless of the refractive index thereof. In the case of the embodiment of FIG. 4A, the cavities may be filled with a material having a different refractive index from that of the light passing areas, and reflective layers may be formed on interfaces of the cavities.

FIG. 5 is a schematic cross-sectional view of a collimator according to another exemplary embodiment of the present invention. Referring to FIG. 5, the light passing areas 23a and 23b and the light non-passing areas 24 are alternately formed in a plane direction in the first and the second plates 21 and 22, respectively. Boundaries between the light passing areas 23a and 23b and the light non-passing areas 24 are inclined toward a substrate and are parallel with the first and the second plates 21 and 22, respectively. The light passing areas 23a and 23b are symmetrical to the light non-passing areas 24 based on a contact surface between the first and the second plates 21 and 22. According to this structure, light incident at a wide angle is emitted at a relatively narrow angle, and a beam incident from a collimator onto the substrate at a very narrow angle passes the light passing areas 23a and 23b without being reflected. There are beams which are reflected once and then emitted or reflected two, three, or more times and then emitted.

In the present embodiment, two plates are used. However, a structure using three or more plates may be easily obtained without departing from the scope of the present invention.

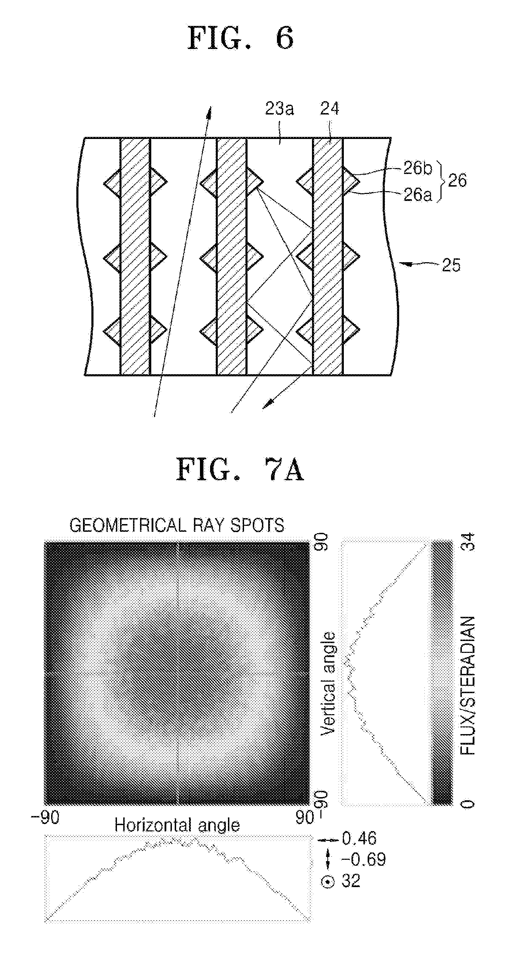

FIG. 6 is a schematic cross-sectional view of a collimator according to another exemplary embodiment of the present invention. Referring to FIG. 6, a collimator 20 includes a plate 25 in which the light non-passing areas 24 and the light passing areas 23 are formed. The light non-passing areas 24 are positioned beside both sides of each of the light passing areas 23, and widths of the light passing areas 23 are very narrow. Protrusions 26 are provided in the light passing areas 23 and include first and second reflective surfaces 26a and 26b. The protrusions 26 may reflect beams having wide incidence angles toward light sources, allow beams having very narrow incidence angles to pass, and reflect beams several times and then emit the reflected beams toward an LCD panel. In the present embodiment, reflective protrusions having reflective surfaces are formed in the light passing areas to reflect beams incident at wide angles, which feeds the beams back. In this structure, a thickness of a plate, distances among the reflective protrusions, and angles of the reflective surfaces may be adjusted to limit an emission angle.

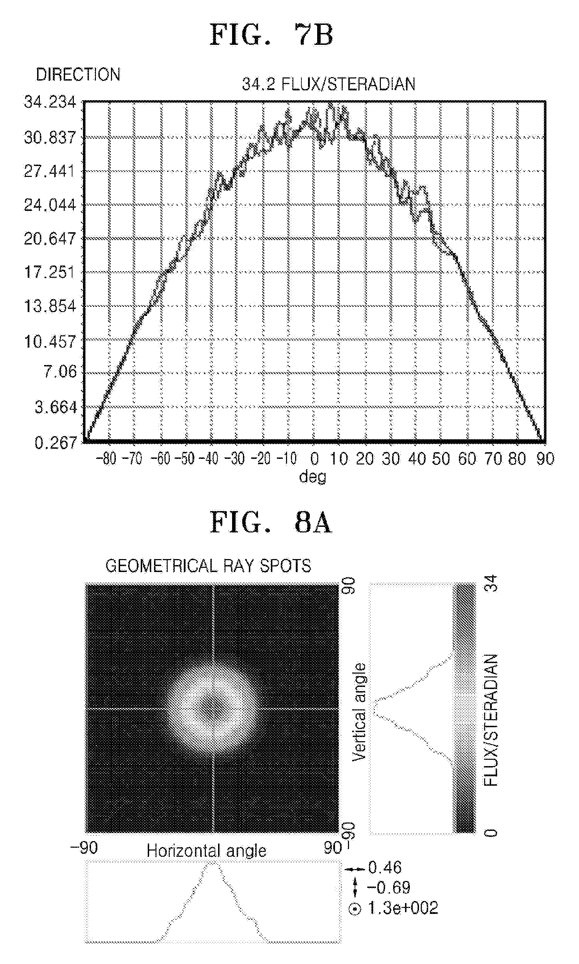

FIG. 7A illustrates light distribution used in a simulation performed to test an exemplary embodiment of the present invention. Referring to FIG. 7A, geometrical ray spots are shown to have an incidence angle of light incident from a collimator. FIG. 7B is a graph illustrating a relationship between the incidence angle and the intensity of the incident light.

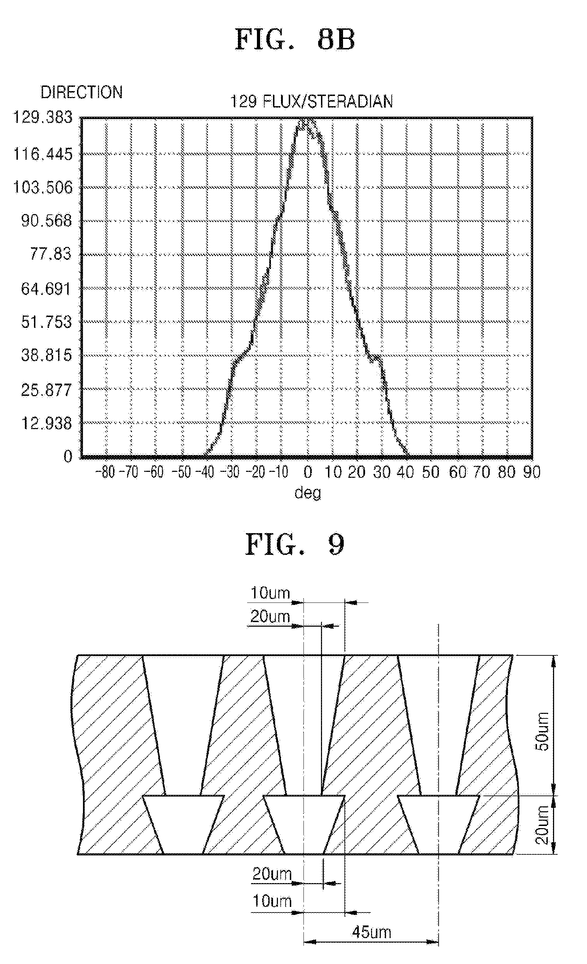

FIG. 8A illustrates results of the simulation to test the present embodiment. Referring to FIG. 8A, light having the characteristics illustrated in FIGS. 7A and 7B is collimated by a collimator of the present invention and then emitted at an emission angle. FIG. 8B is a graph illustrating a relationship between the emission angle and the intensity of the emitted light. FIG. 9 illustrates dimensions of the light passing and the non-passing areas of a collimator obtained under the conditions of the simulation of FIGS. 8A and 8B.

According to the results of the simulation of FIGS. 7A and 7B, a beam having a Lambertian light distribution with an amplitude of ±60° is incident onto the collimator of the present invention. Next, as shown in FIGS. 8A and 8B, an advancing angle of the beam is changed by reflective surfaces or reflective layers in the light passing areas. Thus, the beam is emitted in a light distribution having an amplitude of ±15° and thus focused toward a front surface of an LCD panel. The intensity of the beam in a central area is greatly improved. The emission angle of the beam can be easily adjusted by an appropriate change of design of the reflective surfaces or layers in the light passing areas.

As described above, a collimator according to the present invention can be used in an LCD having a structure as described with reference to FIG. 1. Light having a wide angle can be focused at a narrow angle, and thus the light use efficiency of the LCD can be improved. Also, a contrast ratio can be improved to thereby improve the quality of an image. The collimator of the present invention can be manufactured in a film shape through an appropriate selection of a material, adjustments of thickness, etc. As a result, the collimator of the present invention can be used in a large-sized LCD.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A collimator for a backlight unit, wherein the collimator is disposed between an (liquid crystal display) LCD panel of an LCD and the backlight unit and comprises:
a plate comprising a plurality of light passing areas passing light incident from the backlight unit and a plurality of light non-passing areas formed among the plurality of light passing areas,
wherein the plurality of light passing areas comprise reflective surfaces which are inclined toward a plane of the plate and a direction perpendicular to the plane of the plate to reduce an emission angle of reflected light emitted toward the LCD panel to be less than an incidence angle of light incident onto the plurality of light passing areas.

2. The collimator of claim 1, wherein the plate comprises a first plate and a second plate, the first plate comprising first light passing areas, and the second plate comprising second light passing areas corresponding to the first light passing areas, respectively.

3. The collimator of claim 2, wherein diameters of openings of the first and the second light passing areas are smaller than diameters of exits of the first and the second light passing areas, and the reflective surfaces are provided on inner surfaces of the first and the second light passing areas.

4. The collimator of claim 2, wherein the exits of the first light passing areas are aligned with the openings of the second light passing areas, the openings of the first light passing areas and the exits of the second light passing areas respectively deviate from the exits of the first light passing areas and the openings of the second light passing areas, and the reflective surfaces are provided on the inner surfaces of the first and the second light passing areas.

5. The collimator of claim 4, wherein facing inner surfaces of the first and the second light passing areas are parallel with one another.

6. The collimator of claim 1, wherein protrusions are formed on inner surfaces of the plurality of light passing areas of the plate and comprise first surfaces inclined toward openings of the plurality of light passing areas and the second surfaces inclined toward exits of the plurality of light passing areas, and the reflective surfaces are formed on the inner surfaces of the light passing areas and the first and the second surfaces of the protrusions.

7. The collimator of claim 6, wherein facing inner surfaces of the first and the second light passing areas are parallel with one another.

8. The collimator of any preceding claim, wherein reflective layers are provided in the plurality of light non-passing areas to reflect incident light.

9. A liquid crystal display (LCD) comprising an LCD panel, a backlight unit, and a collimator of any preceding claim provided between the LCD panel and the backlight unit.

10. The LCD of claim 9, further comprising a diffuser which is disposed between the backlight unit and the collimator.
